(19) **Europäisches Patentamt / European Patent Office / Office européen des brevets**

(11) **EP 2 076 456 B1**

(12) **EUROPÄISCHE PATENTSCHRIFT**

(45) Veröffentlichungstag und Bekanntmachung des Hinweises auf die Patenterteilung:
**13.07.2011 Patentblatt 2011/28**

(21) Anmeldenummer: **07817621.1**

(22) Anmeldetag: **29.09.2007**

(51) Int Cl.:
***B65G 5/00*** *(2006.01)*

(86) Internationale Anmeldenummer:
**PCT/DE2007/001779**

(87) Internationale Veröffentlichungsnummer:
**WO 2008/040338 (10.04.2008 Gazette 2008/15)**

(54) **VERFAHREN UND STEUERUNGSVORRICHTUNG ZUM BETREIBEN EINES UNTERIRDISCHEN GASSPEICHERS**

METHOD AND CONTROL DEVICE FOR OPERATING AN UNDERGROUND GAS RESERVOIR

PROCÉDÉ ET DISPOSITIF DE COMMANDE POUR FAIRE FONCTIONNER UN ACCUMULATEUR DE GAZ SOUTERRAIN

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **06.10.2006 DE 102006048128**
**30.08.2007 DE 102007041802**

(43) Veröffentlichungstag der Anmeldung:
**08.07.2009 Patentblatt 2009/28**

(73) Patentinhaber:
• **Elpro GmbH**
**13053 Berlin (DE)**
• **Untergrundspeicher- und Geotechnologie-Systeme GmbH**
**15749 Mittenwalde/Mark (DE)**

(72) Erfinder:
• **LENK, Gunar**
**15711 Königs Wusterhausen (DE)**
• **SCHMIDT, Hans-Werner**
**15370 Petershagen (DE)**
• **SAFFERT, Ulrich**
**10294 Berlin (DE)**
• **JOST, Raimund**
**13129 Berlin (DE)**
• **SCHULZE, Oliver**
**12557 Berlin (DE)**

(56) Entgegenhaltungen:
**DE-C1- 19 653 725**

**Beschreibung**

Die Erfindung betrifft ein Verfahren zum Betreiben eines unterirdischen Gasspeichers nach dem Oberbegriff des Anspruchs 1 und eine Steuerungsvorrichtung zum Betreiben eines unterirdischen Gasspeichers nach dem Oberbegriff des Anspruchs 17.

Ein derartiges Verfahren zum Betreiben eines unterirdischen Gasspeichers dient insbesondere zur Durchführung von Ein- und Ausspeisevorgängen eines Mediums in den bzw. aus dem Gasspeicher. Bei dem Verfahren wird ein Medium in den Gasspeicher eingespeist und aus dem Gasspeicher ausgespeist, wobei zum Einspeisen und Ausspeisen des Mediums eine aus mindestens zwei Sonden bestehende Sondengruppe verwendet wird, durch die das Medium beim Einspeisen und Ausspeisen hindurchfließt. Jede der Sonden wird einer Speicherschicht $P_1$-$P_N$ zugeordnet, über die die jeweilige Sonde mit dem gesamten Gasspeicher in Strömungsverbindung steht. Die Fließrate des Mediums wird anhand von Sollwerten eingestellt.

Das Einstellen der Sollwerte zur Steuerung der Ein- und Ausspeisevorgänge ist herkömmlicherweise Aufgabe eines Reservoiringenieurs, der geeignete Sollwerte ermittelt und dem Anlagenpersonal zum Betreiben und Einstellen der Sonden vorgibt. Die Leistung des Gasspeichers, insbesondere die Effizienz der Ein- und Ausspeisevorgänge und die Kapazität des Gasspeichers zur Aufnahme des Mediums, ist somit wesentlich abhängig von der Erfahrung und der Kompetenz des Reservoiringenieurs.

Aus der DE 196 53 725 C1 sind ein Verfahren und eine Vorrichtung zur Überwachung und Steuerung von Ein- und Ausspeisevorgängen an Gasspeichern mit einem definierten geometrischen Volumen bekannt. Die Überwachung und Steuerung erfolgt hierbei auf der Grundlage des gemessenen Bohrlochkopfdruckes und der daraus abgeleiteten Strömungsgeschwindigkeit bzw. des Volumenstromes eines Mediums in einer Sonde, ohne dass eine direkte Messung der Menge des in der Sonde geführten Fluids erforderlich ist.

Das aus der DE 196 53 725 C1 bekannte Verfahren erleichtert die Überwachung und Steuerung von Ein- und Ausspeisevorgängen an einem Gasspeicher, in dem definierte Aussagen über die Strömungsgeschwindigkeiten in Sonden zur Durchführung der Ein-und Ausspeisevorgänge gemacht werden. Dem die Sonden betreibenden Reservoiringenieur werden dabei die Ein- und Ausspeisevorgänge beschreibende Zustandswerte zur Verfügung gestellt, wobei die eigentliche Steuerung des Systems in der Verantwortung des Reservoiringenieurs liegt.

Der vorliegenden Erfindung liegt die Aufgabe zugrunde, ein Verfahren und eine Steuerungsvorrichtung zum Betreiben eines unterirdischen Gasspeichers zur Verfügung zu stellen, mittels derer die Steuerung des Betriebs des Gasspeichers beim Ein- und Ausspeisen eines Mediums für einen Reservoiringenieur verbessert und eine optimale Nutzung des Gasspeichers bei verbesserter Betriebssicherheit ermöglicht wird.

Diese Aufgabe wird durch ein Verfahren mit den Merkmalen des Anspruchs 1 gelöst.

Erfindungsgemäß ist hierbei vorgesehen, dass die Sollwerte derart bestimmt werden, dass die Differenzen zwischen den Fliessdrücken des Mediums in der jeweiligen Sondengruppe minimiert ist.

Die Erfindung geht von dem Grundgedanken aus, das Verhalten eines Gasspeichers und der mit dem Gasspeicher zum Ein- und Ausspeisen des Mediums gekoppelten Sonden durch ein mathematisches Modell zu beschreiben und anhand des mathematischen Modells die Sollwerte zur Steuerung der Sonden zu errechnen. Das erfindungsgemäße Verfahren ermöglicht somit eine weitestgehende Automatisierung von Steuerungsprozessen und unterstützt den für den Betrieb des Gasspeichers verantwortlichen Reservoiringenieur weitestgehend durch die Vorgabe der Sollwerte.

Die Sollwerte werden erfindungsgemäß derart bestimmt, dass die Differenzen zwischen den Sondenfließdrücken der Sondengruppe, also zwischen den Sonden im Gasspeicher, minimiert ist. Die Sondengruppe weist zwei oder mehr Sonden auf. Nicht alle Sonden des Gasspeichers müssen hierbei einer Sondengruppe zugeordnet sein. Denkbar ist beispielsweise, zwei Sonden des Gasspeichers einer Sondengruppe zuzuordnen und die Druckdifferenzen zwischen den Sondenfliessdrücken dieser Sonden zu minimieren. Denkbar ist aber auch, alle Sonden des Gasspeichers als eine Sondengruppe zu betrachten, und die Differenzen zwischen allen Sondenfließdrücken zu minimieren.

Durch Minimierung der Druckdifferenzen wird verhindert, dass zwischen den Sonden im Gasspeicher Umströmprozesse zum Ausgleich der Druckunterschiede ausgelöst werden, um auf diese Weise ein gleichmäßiges Ein- bzw. Ausspeisen des Mediums aus dem Gasspeicher zu ermöglichen. Das mathematische Modell beschreibt die aus dem Gasspeicher und den Sonden bestehende Anlage derart vollständig, dass aufgrund messtechnisch ermittelter und errechneter Parameter auf zuverlässige Weise Sollwerte für die an den einzelnen Sonden einzustellende Fließrate abgeleitet werden können, die ein Auftreten von Differenzen zwischen den Sondenfließdrücken verhindern.

Vorteilhafterweise stellt das mathematische Modell ein Netzwerkmodell dar, das das Zusammenwirken der mindestens zwei Sonden und des Gasspeichers in Form eines Netzwerks beschreibt. Das Netzwerk weist zu diesem Zweck Elemente in Form von Widerstandselementen, Spannungsquellen und Elementen auf, die das Verhalten der mindestens zwei Sonden und des Gasspeichers, also deren Strömungswiderstände und Speicherkapazitäten und dergleichen, beschreiben. Das mathematische Modell in Form des Netzwerkmodells kann dann nach den aus der Elektrotechnik bekannten Grundsätzen der Netzwerktheorie berechnet werden.

Bevorzugt werden die Sollwerte derart angepasst, dass den Differenzen zwischen den Sondenfließdrücken entsprechende Spannungsdifferenzen zwischen Punkten des Netzwerks, die den Sondenfließdrücken der mindestens zwei Sonden entsprechen, minimiert werden. Die Druckunterschiede zwischen den Sondenfließdrücken im Gasspeicher werden in diesem Zusammenhang als Spannungsdifferenzen ausgedrückt und durch Einstellung der Sollwerte derart minimiert, dass im Idealfall die Druckdifferenzen null sind.

Der Zustand des Gasspeichers und der mit diesen gekoppelten Sonden können sich im Betrieb, insbesondere während der Ein- und Ausspeisevorgänge, durch Veränderung der Druckverhältnisse im Gasspeicher und in den Sonden laufend ändern. Vorteilhafterweise werden die Elemente des die Sonden und den Gasspeicher beschreibenden Netzwerks daher in Echtzeit, abhängig vom aktuellen Zustand des Gasspeichers, bestimmt und laufend angepasst. Die Werte der Elemente hängen hierbei zum einen von statischen Gegebenheiten, beispielsweise der Ausbildung der Bohrungen der Sonden und der in den Sonden verwendeten Bauteile wie beispielsweise Filter und Rohrtour, und zum anderen von dynamisch veränderlichen Größen, beispielsweise der Art der auftretenden turbulenten oder laminaren Strömung und den Druckverhältnissen, ab. Dadurch, dass die Elemente des Netzwerks in Echtzeit aufgrund von erfassten Messwerten berechnet werden, wird sichergestellt, dass der aktuelle Zustand des Gasspeichers und insbesondere dessen dynamisch veränderlichen Parameter berücksichtigt werden.

Bevorzugt ist vorgesehen, dass die Sollwerte ebenfalls in Abhängigkeit vom Zustand des Gasspeichers angepasst werden. Die Anpassung der Sollwerte erfolgt hierbei bei Veränderungen der Elemente des Netzwerks, deren Wert einen bestimmten, vorgegebenen Grenzwert überschreitet. Eine Veränderung des erfassten Zustand des Gasspeichers, die unmittelbar eine Veränderung der Werte der Elemente des die Sonden und den Gasspeicher beschreibenden Netzwerks nach sich zieht, bewirkt somit nicht unmittelbar auch eine Anpassung der Sollwerte, sondern lediglich dann, wenn die Veränderung in ihrem Betrag größer als ein vorgegebener Grenzwert ist. Unnötige Nachregelungen der Sollwerte werden auf diese Weise vermieden.

Vorteilhafterweise werden die Werte der Elemente des Netzwerks und/oder die Sollwerte nach ihrer Bestimmung gespeichert. Hierzu werden die Werte der Elemente des Netzwerks als Funktion der Zeit während der Ein- oder Ausspeisevorgängen in einer Datenbank hinterlegt und stehen für den späteren Betrieb zur Verfügung.

Beispielsweise werden in diesem Zusammenhang die vorab gespeicherten Sollwerte und Elemente des Netzwerks im Betrieb dazu verwendet, den Zustand des Gasspeichers zu identifizieren. Insbesondere ist denkbar, dass in der Datenbank historische Werte der Sollwerte und der Elemente des vollständigen Netzwerks gespeichert sind. Durch Vergleich der aktuell ermittelten Sollwerte und der die Sonden betreffenden Elemente des Netzwerks mit vorab ermittelten und gespeicherten Werten kann dann auf die Elemente zurück geschlossen werden, die die Strömungswiderstände und die Speicherkapazitäten im Gasspeicher beschreiben und zusammen mit den vorab ermittelten Werten abgespeichert und in der Datenbank hinterlegt worden sind, und hieraus der Zustand, beispielsweise der Füllstand des Gasspeichers, abgeleitet werden.

In einer vorteilhaften Ausgestaltung werden bei der Bestimmung der Elemente des Netzwerks die Rohrlängen, Rohrdurchmesser und Rohrreibungszahlen der Sonden berücksichtigt. Die Rohrlängen, Rohrdurchmesser und Rohrreibungszahlen können entlang einer jeden Sonde variieren und werden entsprechend bei der Bestimmung der Elemente des Netzwerks miteinbezogen. Die Sonde kann zu diesem Zweck in einzelne Abschnitte untergliedert werden, denen jeweils eine Rohrlänge, ein Rohrdurchmesser und eine Rohrreibungszahl zugeordnet ist und aus denen in integraler Weise auf den Strömungswiderstand der gesamten Sonde zurück geschlossen wird.

Zur Bestimmung der Elemente zur netzwerktechnischen Beschreibung der Sonde werden die die Ausbildung der Sonden beschreibenden Rohrlängen, Rohrdurchmesser und Rohrreibungszahlen bevorzugt vorab in einer Datenbank gespeichert und zur Bestimmung der Elemente abgerufen. Die Datenbank enthält detaillierte Angaben über die spezifischen Ausbildungen der Sonden, der Sondenführung durch das den Gasspeicher ausbildenden Gesteins, die in den Sonden verwendeten Bauteile und die genaue Ausbildung der Sonden, insbesondere deren Längen, Durchmesser und Reibungszahlen.

In einer weiteren Abwandlung des Verfahrens wird bei einem Ausspeisevorgang zusätzlich die Druckdifferenzen zwischen der Speicherschicht und dem Sondenkopf, der an der Speicherschicht gegenüberliegenden Ende der Sonde angeordnet ist, jeder Sonde dahingehend überwacht, dass der Wert der Druckdifferenz einen Grenzwert nicht überschreitet. Es wird somit überwacht, dass die Druckdifferenz zwischen dem Sondenkopf und der Speicherschicht innerhalb einer Sonde nicht zu groß wird und die Strömungsgeschwindigkeit in der Sonde einen bestimmten Wert nicht überschreiten kann.

Die Aufgabe wird weiterhin durch eine Steuerungsvorrichtung zum Betreiben eines unterirdischen Gasspeichers zur Durchführung des voran gehend beschriebenen Verfahrens mit den Merkmalen des Anspruchs 17 gelöst.

Die Steuerungsvorrichtung weist eine Schnittstelle auf, über die die Steuerungsvorrichtung mit einer aus mindestens zwei Sonden bestehenden Sondengruppe zum Einspeisen eines Mediums in den Gasspeicher oder zum Ausspeisen des Mediums aus dem Gasspeicher gekoppelt ist und die mindestens zwei Sonden steuert, wobei die mindestens zwei Sonden je einer Speicherschicht zugeordnete sind, über die die jeweilige Sonde mit dem Gasspeicher in Strömungsverbindung steht und an dem das Medium einen Druck aufweist. Erfindungsgemäß ist die Steuerungsvorrichtung so ausgebildet, dass die mindestens zwei Sonden derart gesteuert werden, dass die Differenzen der Sondenfließdrücke des Mediums innerhalb der Sondengruppe minimiert ist.

Mittels der erfindungsgemäßen Steuerungsvorrichtung wird ein weitestgehend automatischer Betrieb des Gasspeichers ermöglicht. Die Steuerungsvorrichtung unterstützt den verantwortlichen Reservoiringenieur weitestgehend in seinen Aufgaben und übernimmt selbstständig die Wesentlichen, automatisierbaren, zur Durchführung der Ein- und Ausspeisevorgänge erforderlichen Aufgaben. Dem Reservoiringenieur werden hierbei gezielt Vorschläge unterbreitet, mittels derer ein effizienter und sicherer Betrieb des Gasspeichers möglich ist.

Vorteilhafterweise weist die Steuerungsvorrichtung eine Datenbank zur Speicherung von den Sonden und dem Gasspeicher zugeordneten Sondenparametern in Form von technischen und geologischen Daten und historischen Messwerten auf. Die Steuerungsvorrichtung greift zum Betrieb des Gasspeichers auf eine Vielzahl von in der Datenbank gespeicherten Daten zurück und steuert anhand dieser gespeicherten Daten im Zusammenspiel mit aktuellen, den momentanen Zustand des Gasspeichers beschreibenden Messwerten den Betrieb des Gasspeichers. Die Daten in der Datenbank werden Vorteilhafterweise ständig aktualisiert und um die aktuellen, den Zustand des Gasspeichers beschreibenden Daten erweitert.

Bevorzugt weist die Steuerungsvorrichtung ein Betriebsführungsmodul zur Steuerung der Sonden auf. Das Betriebsführungsmodul übernimmt die den Reservoiringenieur unterstützenden Aufgaben, errechnet und bestimmt die Sollwerte zur Einstellung der Fließraten an den Sonden und ermöglicht auf diese Weise einen effizienten und sicheren Betrieb des Gasspeichers bei maximaler Ausnutzung der Speicherkapazität und optimierten Ein- und Ausspeisevorgängen.

Die Steuerungsvorrichtung weist weiterhin ein Sondentestmodul zur Bestimmung von den die Sonden beschreibenden Sondenparametern auf. Das Sondentestmodul übernimmt die messtechnische Erfassung des aktuellen Zustands der Sonden, misst und errechnet die Strömungsgeschwindigkeiten und die die Sonden beschreibenden Elemente des Netzwerks des mathematischen Modells und charakterisiert auf diese Weise den aktuellen Zustand einer jeden Sonde.

Zur Verwaltung der durch das Sondentestmodul erfassten Sondenparameter dient vorteilhafterweise ein Sondenpassmodul der Steuerungsvorrichtung, das mit der Datenbank der Steuerungsvorrichtung zusammenwirkt und die in der Datenbank hinterlegten, die Sonden beschreibenden Parameter verwaltet und zugänglich macht.

Der Erfindung zugrunde liegende Gedanke soll nachfolgend anhand der in den Figuren dargestellten Ausführungsbeispiele näher erläutert werden. Es zeigen:

Fig. 1      eine schematische Übersichtsdarstellung eines unterirdischen Gasspeichers zum Speichern eines Mediums, insbesondere Erdgas, mit drei Sonden zum Ein- und Ausspeisen des Mediums;

Fig. 2      eine schematische Darstellung eines Netzwerks zur Bestimmung von Sollwerten zur Einstellung der Fließrate des Mediums in den Sonden zum Ein- und Ausspeisen des Mediums;

Fig. 3      ein Ablaufdiagramm der Steuerung des Betriebes des Gasspeichers und

Fig. 4      eine schematische Darstellung einer Steuerungsvorrichtung zur Steuerung des Betriebes des Gasspeichers.

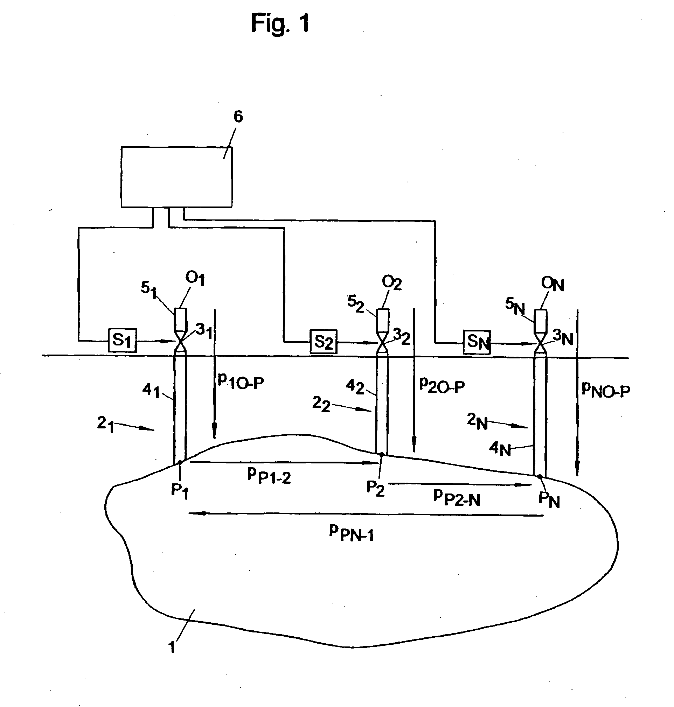

Fig. 1 zeigt in einer schematische Übersichtsdarstellung einen Gasspeicher 1, der mit drei Sonden $2_1$, $2_2$, $2_N$ zum Ein- und Ausspeisen eines in dem Gasspeicher 1 gespeicherten Mediums verbunden ist. Der Gasspeicher 1 kann beispielsweise als Aquiferspeicher ausgebildet sein und zur unterirdischen Speicherung von Erdgas oder anderen Medien dienen.

Die mit dem Gasspeicher 1 gekoppelten Sonden $2_1$-$2_N$ weisen je ein sich zwischen dem Gasspeicher 1 und der Erdoberfläche erstreckendes Sondenrohr $4_1$-$4_N$ auf, das an seinem einen Ende, dem Fußpunkt $P_1$-$P_N$ der Sonde $2_1$-$2_N$, mit dem Gasspeicher 1 und an seinem anderen Ende mit einer Einstellvorrichtung $3_1$-$3_N$ in Strömungsverbindung steht. An die Einstellvorrichtung $3_1$-$3_N$ schließt jeweils eine Sondenleitung $5_1$-$5_N$ an, die die Sonde $2_1$-$2_N$ mit einer in Fig. 1 nicht dargestellten Obertageanlage zur Weiterverarbeitung des in dem Gasspeicher 1 gespeicherten Mediums verbindet.

Zum Einspeisen wird das Fluid durch die Sonden $2_1$-$2_N$ aus der Obertageanlage über die Leitungen $5_1$-$5_N$ und die Rohre $4_1$-$4_N$ in den Gasspeicher 1 geleitet. Umgekehrt wird zum Ausspeisen das Medium durch die Sonden $2_1$-$2_N$ aus dem Gasspeicher 1 zur Obertageanlage hin geführt. Die Fließrate des Mediums in den bzw. aus dem Gasspeicher 1 wird für jede Sonde $2_1$-$2_N$ separat durch die Einstellvorrichtungen $3_1$-$3_N$ eingestellt, die zu diesem Zweck beispielsweise als Regelventile ausgebildet sein können und einstellen, welche Menge des Mediums pro Zeiteinheit durch die Sonde $2_1$-$2_N$ fließt.

Die Einstellvorrichtungen $3_1$-$3_N$ werden durch eine Steuerungsvorrichtung 6 gesteuert, die Sollwerte $S_1$-$S_N$ vorgibt und über die Sollwerte $S_1$-$S_N$ die Fließrate des Mediums in den Sonden $2_1$-$2_N$ einstellt.

Bei Ein- und Ausspeisevorgängen können Unterschiede zwischen den Sondenfließdrücken der Sonden $2_1$-$2_N$

auftreten, die die Ein- und Ausspeisevorgänge nachteilig beeinflussen. Derartige Druckdifferenzen $P_{P1-2}$, $P_{P2-N}$, $P_{PN-1}$ können zu Umströmprozessen des Mediums in dem Gasspeicher 1 führen und verringern die Leistung des Gasspeichers 1, insbesondere dessen Kapazität und die Effizienz der Ein-und Ausspeisevorgänge.

Erfindungsgemäß ist daher vorgesehen, die Sollwerte $S_1$-$S_N$ an den Einstellvorrichtungen $3_1$-$3_N$ der Sonden $2_1$-$2_N$ derart einzustellen, dass die Differenzen zwischen den Sondenfließdrücken $P_{P1-2}$, $P_{P2-N}$, $P_{PN-1}$ der aus den Sonden $2_1$-$2_N$ bestehenden Sondengruppe minimiert werden. Auf diese Weise wird erreicht, dass zwischen den Sondenfließdrücken aller Sonden $2_1$-$2_N$ keine Druckdifferenzen $P_{P1-2}$, $P_{P2-N}$, $P_{PN-1}$ auftreten und Umströmprozesse zwischen den einzelnen Sonden $P_1$-$P_N$ in dem Reservoir weitestgehend vermieden werden.

Denkbar ist hierbei, nur zwei der Sonden $2_1$-$2_N$ einer Sondengruppe zuzuordnen und die Druckdifferenzen nur zwischen diesen Sonden $2_1$-$2_N$ zu minimieren. Vorteilhafterweise werden aber alle Sonden $2_1$-$2_N$ als eine Sondengruppe betrachtet und die Differenzen zwischen allen Sondenfließdrücken $P_{P1-2}$, $P_{P2-N}$, $P_{PN-1}$ im Gasspeicher 1 minimiert.

Eine der wichtigsten Aufgaben bei der Betriebsführung von Gasspeichern 1, insbesondere Erdgasspeichern besteht in der Verteilung der ein- oder auszuspeisenden Menge des Mediums auf die verfügbaren Sonden $2_1$-$2_N$ in Abhängigkeit von ihrer Leistungsfähigkeit. Dabei ist zu beachten, dass möglichst keine großen Druckunterschiede zwischen den Sondenfließdrücken der Sonden $2_1$-$2_N$ auftreten, um gezielt definierte reservoirmechanische Strömungsprozesse innerhalb des Gasspeichers 1 zu erreichen. Das gilt bei Einspeise- und Ausspeiseprozessen. Beim Ausspeisen gilt es zusätzlich, die Sonden $2_1$-$2_N$ daraufhin zu überwachen, dass der Druckunterschied $P_{1O-P}$, $P_{2O-P}$, $P_{NO-P}$ (Depression) zwischen einem Sondenkopf $O_1$-$O_N$ und einer Speicherschicht $P_1$-$P_N$ einer Sonde $2_1$-$2_N$ einen bestimmten Wert nicht überschreitet.

Die ein- oder auszuspeisende Menge des Mediums wird an den Sonden $2_1$-$2_N$ durch an den Einstellvorrichtungen $3_1$-$3_N$ einstellbare Sollwerte $S_1$-$S_N$ eingestellt. Die Einstellvorrichtungen $3_1$-$3_N$ sind beispielsweise als Regelventile ausgebildet und stellen durch Setzen der Sollwerte $S_1$-$S_N$ die Fließrate des Mediums durch die Sonden $2_1$-$2_N$ ein.

Zur Bestimmung der Sollwerte $S_1$-$S_N$ wird ein mathematisches Modell verwendet, das das Verhalten der Sonden $2_1$-$2_N$ und des Gasspeichers 1 mittels eines nichtlinearen Netzwerks beschreibt, das Elemente in Form von Widerstandselementen, Spannungsquellen und Elementen enthält, die das Verhalten der Sonden $2_1$-$2_N$ und des Gasspeichers 1 charakterisieren.

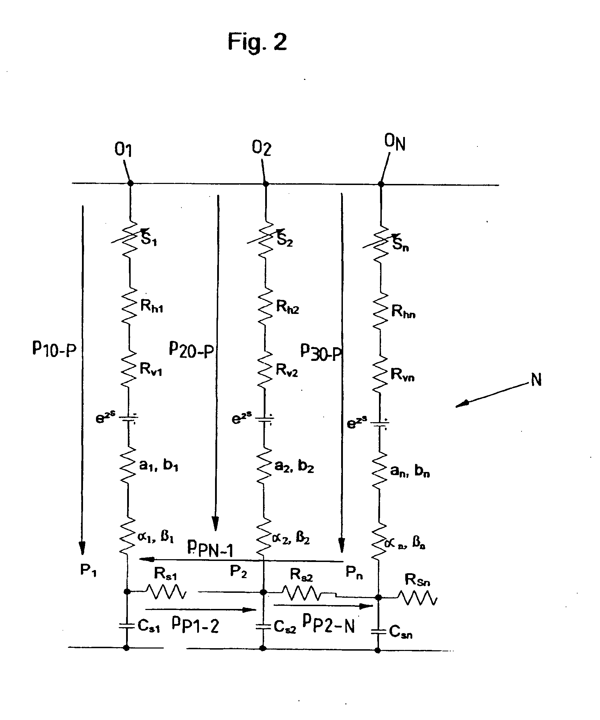

Eine schematische Darstellung eines Netzwerks, das das Zusammenwirken der Sonden $2_1$-$2_N$ und des Gasspeichers 1 beschreibt, ist in Fig. 2 dargestellt. In dem Netzwerk wird jede Sonde $2_1$-$2_N$ als Netzwerkstrang $O_1$-$P_1$, $O_2$-$P_2$, $O_N$-$P_N$ dargestellt und durch ihren horizontalen Strömungswiderstand $R_{h1}$-$R_{hN}$, ihren vertikalen Strömungswiderstand $R_{v1}$-$R_{vN}$, einen Filtrationskoeffizienten $a_1$-$a_N$ und einen Turbulenzfaktor $b_1$-$b_N$ und Hornerkoeffizienten $\alpha_1$-$\alpha_N$ und $\beta_1$-$\beta_N$ beschrieben. An ihrem Sondenkopf $O_1$-$O_N$ sind die Sonden $2_1$-$2_N$ mit der Obertageanlage und an ihrer Speicherschicht $P_1$-$P_N$ mit dem Gasspeicher 1 verbunden. Die Kopplung der Sonden $2_1$-$2_N$ über den Gasspeicher 1 wird durch je einen Strömungswiderstand $R_{s1}$-$R_{sN}$ und ein Element $C_{s1}$-$C_{sN}$ charakterisiert.

Ein Problem bei der Bestimmung der Sollwerte $S_1$-$S_N$ stellen die unterschiedlichen Widerstandswerte der Sonden $2_1$-$2_N$ - bedingt durch die Ausbildung der Sondenrohre $4_1$-$4_N$, die in der Sonde $2_1$-$2_N$ vorhandenen Filter und dergleichen - und des Gasspeichers 1 dar.

Nachfolgend wird die Bestimmung der Fließrate durch eine Sonde $2_1$-$2_N$ unter Berücksichtigung der Ausbildung der Sonden $2_1$-$2_N$, die sich aus einzelnen Streckenabschnitten zusammensetzen, kurz zusammengefasst.

Für jede Sonde $2_1$-$2_N$ wird die Strecke zwischen dem Gasspeicher 1 und der Obertageanlage, die mit dem Sondenkopf verbunden ist, wie folgt berechnet:

Zunächst wird die Strecke zwischen dem Gasspeicher 1 und der Speicherschicht $P_1$-$P_N$ der Sonde $2_1$-$2_N$, auch als Bohrlochsohle bezeichnet, berechnet zu

$$p^2_{BS-R} - p^2_{BS-F} = a*Q + b*Q^2.$$

Für die Strecke des Sondenrohrs $4_1$-$4_N$ zwischen der Speicherschicht $P_1$-$P_N$ der Sonde $2_1$-$2_N$ und dem Sondenkopf $O_1$-$O_N$ ergibt sich

$$p^2_{BS-F} - p^2_{St-F}*e^{2S} = \Theta_{Sonde}*Q^2$$

und für die Strecke der Leitung $5_1$-$5_N$ zwischen dem Sondenkopf $O_1$-$O_N$ und der Obertageanlage

$$p^2_{St\text{-}F} - p^2_{OTA} = \Theta_{Leitung} {}^* Q^2.$$

Diese Gleichungen lassen sich zusammenfassen zu

$$p^2_{BS\text{-}F} - p^2_{OTA} {}^* e^{2S} = \Theta_{Komplex} {}^* Q^2 \text{ mit } \Theta_{Komplex} = (\Theta_{Sonde} + \Theta_{Leitung} {}^* e^{2S}) \qquad (1)$$

und zu

$$p^2_{BS\text{-}R} - p^2_{OTA} {}^* e^{2S} = a {}^* Q + (b + \Theta_{Komplex}) Q^2 \qquad (2)$$

und durch Lösen von (2) und (3) nach Q zu

$$Q = \frac{\sqrt{a^2 + 4(b + \Theta_{Komplex})(p^2_{BS\text{-}R} - p^2_{OTA} \cdot e^{2S})} - a}{2(b + \Theta_{Komplex})} \qquad (3)$$

In den vorangehenden Gleichungen beschreiben

| | |
|---|---|
| $Q$ | die Fließrate, |
| $P_{BS\text{-}F}$ | den Fließdruck an der Speicherschicht $P_1$-$P_N$ der Sonde $2_1$-$2_N$, |
| $P_{BS\text{-}R}$ | den Ruhedruck an der Speicherschicht $P_1$-$P_N$ der Sonde $2_1$-$2_N$, |
| $P_{ST\text{-}F}$ | den Fließdruck an dem Sondenkopf $O_1$-$O_N$ der Sonde $2_1$-$2_N$, |
| $P_{OTA}$ | den Fließdruck am Endpunkt der Leitung $5_1$-$5_N$ an der Obertageanlage, |
| $\Theta_{Sonde}$ | der Strömungswiderstand des Sondenrohr $4_1$-$4_N$, |
| $\Theta_{Leitung}$ | der Strömungswiderstand der Leitung $5_1$-$5_N$, |
| $\Theta_{Komplex}$ | der Strömungswiderstand der gesamten Sonde $2_1$-$2_N$, |
| $a$ | den Filtrationskoeffizient nach Minsky, |
| $b$ | den Turbulenzfaktor nach Minsky und |
| $e^{2S}$ | den Barometric-Faktor in der Sonde $2_1$-$2_N$. |

Die Gleichung (3) wird benutzt, um Leistungskurven für jede Sonde $2_1$-$2_N$ zu erzeugen, die für jede Sonde $2_1$-$2_N$ in Form einer Kurvenschar die Fließrate Q in Abhängigkeit vom Ruhedruck $P_{BS\text{-}R}$ an der Speicherschicht $P_1$-$P_N$ mit dem Fließdruck $P_{OTA}$ an der Obertageanlage als Parameter darstellt. Zur Bestimmung der Leistungskurven wird die Kurvenschar Q=f($P_{BS\text{-}R}$, $P_{OTA}$) für $P_{OTA}$ < $P_{BS\text{-}R}$ berechnet und als Kurvenschar Q=f($P_{BS\text{-}R}$) für unterschiedliche $P_{OTA}$ dargestellt.

Der Ruhedruck $P_{BS\text{-}R}$ repräsentiert den Speicherdruck an der Speicherschicht $P_1$-$P_N$. Die Leistungskurven gestatten somit die Aussage, welchen Fließrate Q eine Sonde $2_1$-$2_N$ bei einem bestimmten Speicherdruck $P_{BS\text{-}R}$ liefern kann, wenn an der Obertageanlage ein festgelegter Druck $P_{OTA}$ gehalten wird.

Die Bestimmung der Parameter a und b erfolgt experimentell mit Hilfe eines Sondentests. Weitere Parameter des Speichers wie Schichttemperatur, Fluidviskosität, Realgasfaktor, Gasleitfähigkeit, Permeabilität, Druckleitfähigkeit, Komplexparameter Unvollkommenheitsgrad, effektiver Bohrlochradius werden während eines Sondentests aus einer Druckaufbau- und Druckabfallmessung bestimmt.

Herkömmlichenrveise wird in Gleichung (1) eine Vereinfachung vorgenommen, indem $\Theta_{Komplex}$ als konstant angesetzt wird. Dieses ist ungenau und führt zu einer unvollständigen Berücksichtigung des sich entlang eines Sondenrohrs ändernden Strömungswiderstands der Sonde $2_1$-$2_N$. Daher wird im Rahmen des hier vorgestellten Verfahrens der Strömungswiderstand $\Theta$ = f(Q) als Funktion der Fließrate Q und der Ausbildung der Sonde $2_1$-$2_N$ berechnet und in der Gleichung (3) berücksichtigt, indem auf die Rohrlängen, Rohrdurchmesser und Rohrreibungszahlen zurückgegriffen wird, die in einer Datenbank der Steuerungseinrichtung 6 gespeichert sind.

Die Berechnung der Funktion $\Theta$ = f(Q) als Funktion der Fließrate Q und der Ausbildung der Sonde $2_1$-$2_N$ ist aufwendig, da für jede Sonde $2_1$-$2_N$ eine Vielzahl von Bauteilen, beispielsweise Rohrabschnitte, Filter, Ventile und dergleichen, berücksichtigt werden müssen, und wird daher computergestützt auf einem Rechner der Steuerungsvorrichtung 6 durchgeführt.

Der Strömungswiderstand berechnet sich (abschnittsweise) zu

$$\Theta = k * \lambda * \frac{z^2 * T^2}{d^5}\left(e^{2s} - 1\right) \quad , \qquad\qquad (4)$$

wobei $\lambda$ die Rohrreibungszahl, d den Rohrdurchmesser, T die mittlere Temperatur des Mediums, $e^{2s}$ der Barometric-Faktor und z den Realgasfaktor darstellen. Die Rohrlänge wird bei der Ermittlung des Gewichts der Mediumsäule berücksichtigt. Aus den ermittelten Strömungswiderständen können dann direkt die Werte der die Strömungswiderstände darstellenden Widerstandselemente $R_{h1}$-$R_{hN}$, $R_{v1}$-$R_{vN}$ des Netzwerks N abgeleitet werden.

In Abhängigkeit von der so genannten Reynoldszahl Re ergeben sich unterschiedliche Strömungswiderstände für turbulente bzw. laminare Strömungen. Die Art der Strömung wird daher bei der Berechnung der Strömungswiderstände berücksichtigt. Im Ergebnis wird eine Gleichung für Q = f($P_{BS\text{-}R}$,$\Theta$) erhalten, die zur Bestimmung der Kurvenschar der Leistungskurven dient und die Ausbildung der Sonden $2_1$-$2_N$ in exakter Weise berücksichtigt.

Beim Ein- und Ausspeisen des Mediums in den bzw, aus dem Gasspeicher 1 sollen möglichst keine Druckunterschiede bei den Sondenfließdrücken der Sonden $2_1$-$2_N$ auftreten, um Umströmprozesse innerhalb des Gasspeichers 1 zu verhindern. Um das zu erreichen, werden der Zieldruck berechnet und daraus entsprechende Sollwerte $S_1$-$S_N$ zur Steuerung der Fließrate Q jeder einzelnen Sonde $2_1$-$2_N$ abgeleitet.

Für die Berechnung wird das in Fig. 2 dargestellte Netzwerk N von Widerstandselementen $R_{h1}$-$R_{hN}$, $R_{v1}$-$R_{vN}$, $R_{s1}$-$R_{sN}$, Spannungsquellen Barometric-Faktor ($e^{2s}$) sowie Elementen $C_{s1}$-$C_{sN}$ verwendet, das eine Berechnung des Zusammenwirkens der Sonden $2_1$-$2_N$ und des Gasspeichers 1 nach den Gesetzen der Elektrotechnik mit dem Ziel gestattet, die Sollwerte $S_1$-$S_n$ so zu berechnen, dass die Spannungsdifferenzen (entsprechend den Druckdifferenzen $P_{P1\text{-}2}$, $P_{P2\text{-}N}$, $P_{PN\text{-}1}$) zwischen den Punkten $P_1$-$P_n$ minimiert ist. Auf diese Weise wird ermöglicht, den Gasspeicher 1 gleichmäßig bei weitestgehender Vermeidung von Umströmprozessen im Gasspeicher 1 ein- bzw. auszuspeichem.

Das in Fig. 2 dargestellte Netzwerk N enthält Widerstandselemente $R_{h1}$-$R_{hN}$, $R_{v1}$-$R_{vN}$, $a_1$-$a_N$, $b_1$-$b_N$, $\alpha_1$-$a_N$, $\beta_1$-$\beta_N$, die in einem vorab durchgeführten, messtechnischen Sondentest ermittelt und in der Datenbank der Steuerungsvorrichtung 6 gespeichert sind. Die Widerstände $R_{h1}$-$R_{hN}$ und $R_{v1}$-$R_{vN}$ repräsentieren die horizontalen und vertikalen Anteile der Widerstände der einzelnen Sonden $2_1$-$2_N$ und werden in Abhängigkeit von den sich ändernden, in der Datenbank gespeicherten Rohrlängen, Rohrdurchmesser und Rohrreibungszahlen für jede einzelne Sonde $2_1$-$2_N$ berechnet.

Die Widerstands- und Speicherelemente $R_{s1}$-$R_{sN}$ und $C_{s1}$-$C_{sN}$ bilden ein RC-Ersatzwiderstandsnetzwerk, das die Kopplung zwischen den Sonden $2_1$-$2_N$ beschreibt und vom aktuellen Speicherzustand abhängig ist.

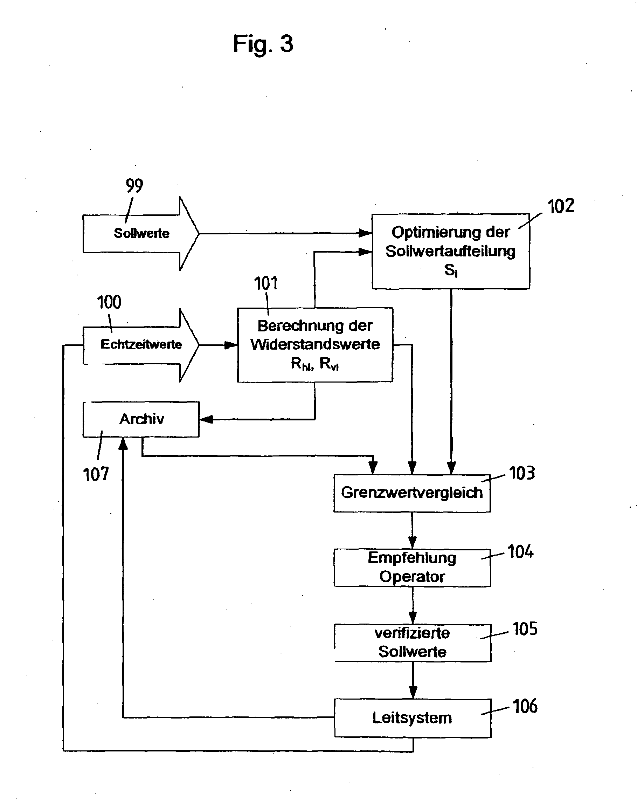

In Fig. 3 ist der Ablauf der durch die Steuerungsvorrichtung 6 vorgenommenen Steuerung in einer schematischen Form dargestellt. Initial werden in Schritt 99 Sollwerte $S_1$-$S_N$ vorgegeben. Auf Basis von in Echtzeit gemessenen Druckzuständen, die einen Zustandsvektor darstellen, aus dem Leitsystem (bestehend aus den Sonden $2_1$-$2_N$ und ihren Bauteilen) in Schritt 100 erfolgt in Schritt 101 eine laufende Berechnung der Werte der Widerstandelemente $R_{h1}$-$R_{hN}$, $R_{v1}$-$R_{vN}$. Ergeben sich bei der laufenden Bestimmung der Widerstandelemente $R_{h1}$-$R_{hN}$, $R_{v1}$-$R_{vN}$ Veränderungen, deren Wert eine gewisse Grenze überschreitet, so erfolgt in Schritt 102 eine Neuberechnung der Sollwerte $S_1$-$S_N$. Die Sollwerte $S_1$-$S_N$ werden in Schritt 103 von einer Funktion Grenzwertvergleich zusammen mit dem in Echtzeit erfassten Zustandsvektor des Leitsystems auf Plausibilität überprüft und in Schritt 104 einem Operator als neue Sollwerte vorgeschlagen. Der Operator verifiziert in Schritt 105 die Sollwerte $S_1$-$S_N$ und übergibt diese in Schritt 106 dem Leitsystem. Die Sollwerte $S_1$-$S_N$ werden in Schritt 107 in ein Archiv der Datenbank der Steuerungsvorrichtung 6 eingetragen.

Die Funktion Grenzwertvergleich gemäß Schritt 103 enthält untere und obere Wam- und Alarmgrenzen, die von einem Operator, in der Regel ein Reservoiringenieur, in Abhängigkeit von den örtlichen Gegebenheiten des Gasspeichers 1, der Ausrüstung mit Messtechnik (verfügbare Messwerte) und dem gewünschten Betriebsregime festgelegt werden.

In einer vorteilhaften Ausgestaltung werden die Elemente $R_{s1}$-$R_{sN}$, $C_{s1}$-$C_{sN}$ des RC-Ersatzwiderstandsnetzwerks aus gespeicherten Archivdaten identifiziert. Im Archiv liegen die die Elemente des Netzwerks N repräsentierenden Parameter $S_1$-$S_N$, $a_1$-$a_N$, $b_1$-$b_N$, $\alpha_1$-$\alpha_N$, $\beta_1$-$\beta_N$, $R_{h1}$-$R_{hN}$, $R_{v1}$-$R_{vN}$ und die Ein- bzw. Ausspeisebilanzen jeder einzelnen Sonde $2_1$-$2_N$ vor. Durch einen Vergleich der aktuell ermittelten Parameter $S_1$-$S_N$, $a_1$-$a_N$, $b_1$-$b_N$, $\alpha_1$-$\alpha_N$, $\beta_1$-$\beta_N$, $R_{h1}$-$R_{hN}$, $R_{v1}$-$R_{vN}$ mit im Archiv gespeicherten Parametern kann dann der Zustand der Sonden $2_1$-$2_N$ und des Gasspeichers 1 identifiziert und unmittelbar die ebenfalls in dem Archiv gespeicherten Elemente $R_{s1}$-$R_{sN}$ und $C_{s1}$-$C_{sN}$ des RC-Ersatzwiderstandsnetzwerks abgeleitet und so auf den aktuellen Zustand des Gasspeichers 1 zurück geschlossen werden.

Die Steuerungsvorrichtung 6 ist bevorzugt als Rechnersystem ausgebildet und zur Steuerung der aus den Sonden $2_1$-$2_N$, dem Gasspeicher 1 und der Obertageanlage bestehenden Leitsystem eingerichtet. Die Steuerungsvorrichtung 6 weist zu diesem Zweck ein Softwaresystem auf, das die Steuerungsaufgaben übernimmt und auf dem Rechnersystem implementiert ist.

Das Softwaresystem übernimmt die Steuerung des Leitsystem auf weitgehend automatische Weise und unterstützt einen verantwortlichen Reservoiringenieur in der Betriebsführung des Gasspeichers 1. Mittels des Softwaresystems werden der Betrieb des Gasspeichers 1 optimiert und Ein- und Ausspeisevorgänge effizient durchgeführt. Durch die optimale Steuerung der Sonden $2_1$-$2_N$ des Leitsystems können die Kapazität des Gasspeichers 1 verbessert und zudem die Standzeiten der Sonden $2_1$-$2_N$ erhöht, Betriebskosten reduziert und Ausfälle frühzeitig erkannt werden.

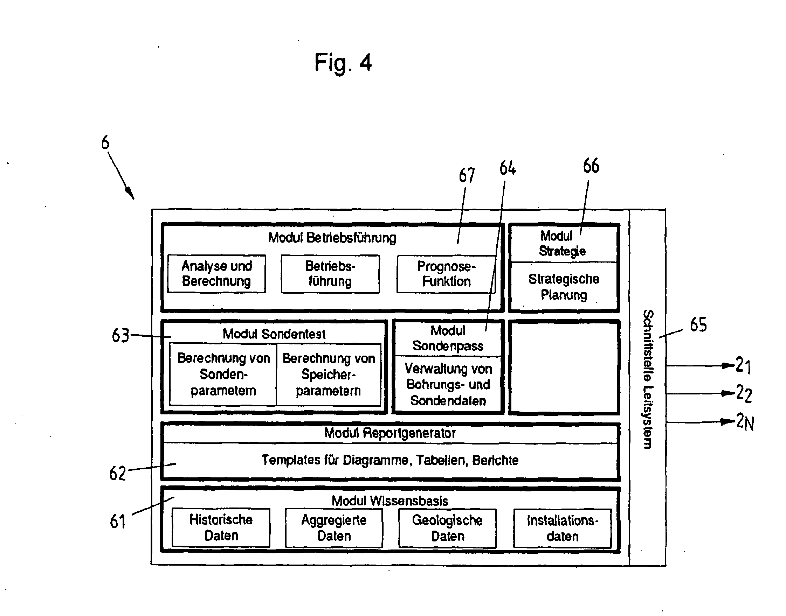

Eine Übersicht über die funktionelle Einrichtung der Steuerungsvorrichtung 6 ist in Fig. 4 dargestellt. Die Steuerungsvorrichtung 6 weist einzelne Module 61-64, 66-67, die als Teil des Softwaresystems auf dem Rechnersystem der Steuerungsvorrichtung 6 implementiert sind.

Das Softwaresystem weist ein Betriebsführungsmodul 67 auf, das die Evaluation und Analyse aller relevanten Daten, die Bestimmung von Soll- und Grenzwerten sowie Prognosefunktionen übernimmt. Das Betriebsführungsmodul 67 ermöglicht einen weitgehend automatischen Betrieb des Gasspeichers 1.

Relevante technische und geologische Daten als auch historische Messwerte werden in einer Datenbank 61 (Modul Wissensbasis) gespeichert, die während des Betriebes aktualisiert wird.

Ein Reportmodul 62 erzeugt auf Basis von betreiberspezifisch entworfenen Templates und den in der Datenbank 61 enthaltenen Daten Dokumente mit Tabellen und Graphiken für das Speichermanagement und die Dokumentation von Vorgängen.

Das Sondentestmodul 63 dient der Bestimmung und Überprüfung von Sondenparametern und Reservoireigenschaften und gestattet den Vergleich mit früheren Tests und anderen Sonden $2_1$-$2_N$.

Der Sondenpassmodul 64 übernimmt die Verwaltung der die Sonden $2_1$-$2_N$ betreffenden Daten und gestattet den schnellen Zugriff auf alle Sondendaten.

Das Softwaresystem der Steuerungsvorrichtung 6 gestattet die Beobachtung und Kontrolle von Ein-/und Ausspeiseprozessen und informiert den Bediener über aktuelle Messwerte sowie den aktuellen Zustand der Untertageanlage des Gasspeichers 1. Beim Betrieb von Aquiferspeichem sind zusätzlich geologische Besonderheiten der jeweiligen Lagerstätte in Zusammenhang mit Sondenparametern und dem verwendeten Fluid zu beachten. Neben Messwerten aus der Anlage wird eine Vielzahl von Informationen (teils zusätzlich berechnet) verfügbar gemacht werden, um Sollwerte $S_1$-$S_N$ für Ein- und Ausspeiseprozesse, insbesondere unter Berücksichtigung reservoirmechanischer Restriktionen, bestimmen zu können. Das Softwaresystem unterstützt das betreibende Personal und nimmt dem Personal Routinearbeiten (wie z.B. die Bestimmung der Kennwerte von Sonden $2_1$-$2_N$ und des Gasspeichers 1, die Verwaltung von Sonden- und Bohrungsdaten und die Erzeugung von Diagrammen, Übersichten und Berichten für die Dokumentation des Speicherbetriebes) ab.

Das Softwaresystem der Steuerungsvorrichtung 6 unterstützt weiterhin die Entscheidungsfindung zum optimalen Betreiben des Gasspeichers 1 und übernimmt die Überwachung von Ein- und Ausspeichervorgängen insbesondere dann, wenn der Gasspeicher 1 im Bereich seiner Leistungsgrenzen gefahren werden soll.

Vor Einsatz der Steuerungsvorrichtung 6 führt das Softwaresystem eine Analyse der Besonderheiten des Gasspeichers 1 mit seinen Sonden $2_1$-$2_N$ und der Anforderungen an die Art und Weise der Betriebsführung durch. Auf Basis dieser Ergebnisse wird das Softwaresystem anwendungsbezogen angepasst, um eine optimale, auf den Gasspeicher 1 gerichtete Betriebsführung zu ermöglichen.

Zu den Aufgaben eines Reservoiringenieurs gehört es, für den von ihm betreuten Gasspeicher 1 Sollwerte $S_1$-$S_N$ für die Ein- und Ausspeicherprozesse zu ermitteln und dem Anlagenpersonal vorzugeben. Das Softwaresystem der Steuerungsvorrichtung 6 stellt ein Prozessführungssystem dar und bietet Funktionen an, die den Reservoiringenieur beim Betrieb des Gasspeichers 1 mit seinen Bohrungen und Sonden $2_1$-$2_N$ unterstützt, eine optimale Nutzung der Kapazität des Gasspeichers 1 ermöglicht und die Betriebssicherheit der Anlage erhöht.

Folgende Vorteile stellt die Verwendung des Softwaresystems zur Steuerung des Gasspeichers 1 zur Verfügung:

- Erhöhung der Förderleistung der Sonden $2_1$-$2_N$ und der gesamten Speicherleistung,
- Reduktion des Betriebsrisikos durch frühzeitiges Erkennen von Störungen,
- Gewährleistung einer schonenden Fahrweise des Gasspeichers 1, d.h. längere Lebensdauer der Sonden $2_1$-$2_N$ und Aggregate der Anlage,
- Vorhersagbarkeit und Reproduzierbarkeit des Verhaltens bei Umstellungen,
- schnellere und sichere Reaktionen bei Lastwechseln,
- einfacher Zugriff auf geologische Daten und Installationsdaten jeder Sonde $2_1$-$2_N$.
- vereinfachte Auswertung von Daten,
- effektive Erstellung von Berichten und Dokumenten und
- erhöhte Bedienerfreundlichkeit des Leitsystems.

Die Module der Steuerungsvorrichtung sollen nachfolgend im Einzelnen beschrieben werden.

1. Modul Wissensbasis 61

Grundlage für alle Funktionen des Softwaresystems bildet das Modul Wissensbasis in Form der Datenbank 61. Dort sind alle Daten und Informationen gespeichert, die zum Betrieb des Softwaresystems benötigt werden. Dazu gehören

- die Strukturbeschreibung der Anlage / Speichergeometrie,
- Speicher- und Bohrungsdaten,
- Installationsdaten und Messtechnikausrüstung der Sonden $2_1$-$2_N$,
- manuell eingegebene, importierte und berechnete Werte,
- projektspezifische Konstanten und Einstellungen.

Echtzeit- und Archivdaten werden über eine Schnittstelle 65 an die Sonden $2_1$-$2_N$ bereitgestellt.

2. Betriebsführungsmodul 67

Die Aufgabe des Betriebsführungsmoduls 67 besteht darin, die Leistung jeder Sonde $2_1$-$2_N$ in Übereinstimmung mit den Richtlinien zur Speicherführung sowie den ökonomischen und sicherheitstechnischen Vorschriften zu überwachen. Die Beobachtung aller Sonden $2_1$-$2_N$ erlaubt wiederum die Interpretation der Speicherprozesse und die Berechnung der
Speicherkapazität mit dem Ziel, den Speicherbetrieb zu optimieren. So werden Prognosen für spezielle Anforderungen durchgeführt und die Untersuchung verschiedener Betriebsarten unterstützt werden. Das Betriebsführungsmodul 67 wird an die Besonderheiten der Betriebsführung für jeden einzelnen Gasspeicher 1 besonders angepasst.
Das Betriebsführungsmodul 67 erstellt auf Basis von ermittelten Kennlinien und speziell vorgegebenen, einsatzfallspezifischen Regeln eine Empfehlung zum Betrieb des Gasspeichers 1, insbesondere, welche Sonden $2_1$-$2_N$ mit welchen Sollwerten $S_1$-$S_N$ in welchen Grenzen gefahren werden sollen. Die letzte Entscheidung über die tatsächlich einzustellenden Sollwerte $S_1$-$S_N$ obliegt dem Reservoiringenieur. Denkbar ist in diesem Zusammenhang jedoch auch, mittels des Betriebsführungsmoduls 67 den Betrieb des Gasspeichers 1 vollständig zu automatisieren, die Einstellung der Sollwerte $S_1$-$S_N$ also selbständig von der Steuerungsvorrichtung 6 durchführen zu lassen.
Das Betriebsführungsmodul 67 stellt die bestimmten Sollwerte $S_1$-$S_N$ über eine Schnittstelle 65 den Sonden $2_1$-$2_N$ zur Verfügung und steuert die Einstellvorrichtungen $3_1$-$3_N$ zum Einstellen der Fließraten der Sonden $2_1$-$2_N$.

3. Sondenpassmodul 64

Der Sondenpassmodul 64 dient zur Verwaltung von Bohrungs- und Sondendaten. Im Sondenpassmodul 64 werden Informationen zur Geologie des Gasspeichers 1 und zu Bohrungen und bohrungsspezifische Untertageinformationen in der Datenbank 61 abgelegt. Damit steht dem Geologen bzw. dem Reservoiringenieur eine Datensammlung mit Werten und Parametern jeder Sonde $2_1$-$2_N$ zur Verfügung, in der er zu jedem Zeitpunkt aktuelle Informationen über jede Sonde $2_1$-$2_N$ beispielsweise für Wartungs- und Instandhaltungszwecke erhalten kann. Weiterhin werden die Ergebnisse von geologischen Messungen der Sonden $2_1$-$2_N$ gespeichert. Die Datenbank 61 enthält Informationen über:

- den Speicher (Lage, Gasvolumina, geologische Struktur, Fläche, Tiefe, usw.),
- die Bohrung (Lage, Ansatzhöhe, Typ, Bohrzeitraum, Bohrverfahren, Abschluss usw.),
- die Sonde $2_1$-$2_N$ (Technische Rohrtour, Förderrohrtur, Filter, Perforation, Zementage/Ringraumfüllung),
- die Lithologie und Stratigraphie und
- Messdaten (radioaktive Marken, Bohrlochmesskurven).

4. Sondentestmodul 63

Das Sondentestmodul 63 dient der Erfassung und Berechnung von Sonden- und Schichtparametern und liefert Aussagen über die Leistungsfähigkeit der Sonden $2_1$-$2_N$ beim Ein- und Ausspeisen. Optional werden Fluidanalysedaten zur Bestimmung der PVT-Eigenschaften (dynamische Viskosität, Z-Faktor und Expansionsfaktor etc.) berücksichtigt.
Die Bestimmung der Sondenparameter basiert auf dem Sondentest nach der Methode von MINSKY (HOUPEURT) oder RAWLINS SCHELLHARDT. Die Sondenparameter werden beispielsweise aus in einem Ausspeisetest erhaltenen Sondentestdaten mit der Minsky-Gleichung ermittelt. Dazu wird eine Indikatorkurve interaktiv bestimmt, um die Koeffizienten der Minsky-Gleichung a, b zu erhalten. Auf Basis der Sondentestdaten können auch die im amerikanischen Raum verwendeten Koeffizienten C, n nach RAWLINS SCHELLHARDT berechnet werden. Anhand der Ergebnisse der Sondentests und der Minsky-Auswertung lassen sich die Leistungskurven für Ein- und Ausspeisung berechnen. Diese werden in Diagrammen als Kurvenschar oder in tabellarischer Form dargestellt und ermöglichen eine Aussage darüber, welche Ausspeiserate eine bestimmte Sonde $2_1$-$2_N$ bei einem bestimmten Speicherdruck liefern kann, wenn an der Obertageanlage ein festgelegter Druck eingehalten wird.

Das Softwaresystem unterstützt den Vergleich der Testdaten einer Sonde $2_1$-$2_N$ mit ihren eigenen historischen Daten oder mit den Testdaten anderer Sonden $2_1$-$2_N$. Die Leistung des Gasspeichers 1 kann in einer Summenkurve zusammengefasst werden.

Für die Bestimmung von Schichtparametem kann beispielsweise das Verfahren nach Horner verwendet werden, mittels dessen insbesondere die Homerkoeffizienten $\alpha_1$-$\alpha_N$, $\beta_1$-$\beta_N$ bestimmt werden. Die Diagramme für den Druckaufbau- bzw. Druckabfallmessung (DAM/DAFM) werden durch das Softwaresystem graphisch erzeugt, wobei aus der Graphik ein extrapolierter Druck ermittelt werden kann, aus welchem dann der mittlere Reservoirdruck, die Speicherpermeabilität und der Skinfaktor der getesteten Sonde abgeschätzt werden können.

5. Reportmodul 62

Das Reportmodul 62 dient als Berichtsassistent, mit dessen Hilfe Reports und Dokumentationen in Form von anwenderspezifischen Formularen erstellt werden können, wobei der Reservoir-Ingenieur festlegen kann, zu welchem Zeitpunkt ausgewählte Reports ausgegeben werden sollen.

6. Strategiemodul 66

Die Steuerungsvorrichtung 6 kann optional ein weiteres Modul, das Strategiemodul 66, enthalten, das der strategischen Planung der Betriebsführung des Gasspeichers 1 dient. Mittels des Strategiemoduls 66 werden eine Planung des zukünftigen Betriebs des Gasspeichers nach technischen und betriebswirtschaftlichen Gesichtspunkten erstellt und einem Reservoiringenieur Vorschläge unterbreitet. Das Strategiemodul 66 ermöglicht zusammen mit dem Betriebsführungsmodul 67 (das die aktuelle Steuerung der Sonden $2_1$-$2_N$ übernimmt) eine Automatisierung des gesamten Betriebes des Gasspeichers 1.

Der der Erfindung zugrunde liegende Gedanke ist nicht auf die vorangehend beschriebenen Ausführungsbeispiele beschränkt. Insbesondere kann das erfindungsgemäße Verfahren zur Steuerung von Gasspeichern in Form von Aquiferspeichem eingesetzt werden, die ein Fluid in Form von Erdgas zwischenspeichern. Wesentlich ist, dass das Verfahren durch automatisches Setzen der Sollwerte einen optimalen Betrieb des Gasspeichers bei maximaler Effizienz von Ein-und Ausspeisevorgängen und erhöhter Ausnutzung der Speicherkapazität ermöglicht.

**Bezugszeichenliste**

| | |
|---|---|
| 1 | Gasspeicher |
| $2_1$-$2_N$ | Sonde |
| $3_1$-$3_N$ | Einstellvorrichtung |
| $4_1$-$4_N$ | Sondenrohr |
| $5_1$-$5_N$ | Sondenleitung |
| 6 | Steuerungsvorrichtung |
| 61 | Datenbank |
| 62 | Reportmodul |
| 63 | Sondentestmodul |
| 64 | Sondenpassmodul |

| | |
|---|---|
| 65 | Schnittstelle |
| 66 | Strategiemodul |
| 67 | Betriebsführuhgsmodul |
| $a_1$-$a_N$, $b_1$-$b_N$, $\alpha_1$-$\alpha_N$, $\beta_1$-$\beta_N$ | Widerstandselement |
| $e^{2s}$ | Barometric-Faktor |
| $C_{s1}$, $C_{s2}$ | Element |
| N | Netzwerk |
| $O_1$,-$O_N$ | Sondenkopf |
| $p_{P1-2}$, $p_{P2-N}$, $p_{PN-1}$ | Druckdifferenzen |
| $p_{1O-P}$, $p_{2O-P}$, $p_{NO-P}$ | Druckdifferenzen |
| $P_1$-$P_N$ | Speicherschicht |
| $R_{h1}$-$R_{hN}$, $R_{v1}$-$R_{vN}$, $R_{s1}$, $R_{s2}$ | Widerstandselement |
| $S_1$-$S_N$ | Sollwert |

**Patentansprüche**

1. Verfahren zum Betreiben eines unterirdischen Gasspeichers, bei dem

   - ein Medium in den Gasspeicher eingespeist und aus dem Gasspeicher ausgespeist wird,
   - zum Einspeisen und Ausspeisen des Mediums eine aus mindestens zwei Sonden bestehende Sondengruppe verwendet wird, durch die das Medium beim Einspeisen und Ausspeisen hindurchfließt,
   - jede der mindestens zwei Sonden eine dem Gasspeicher zugeordneten Speicherschicht aufweist, über die jeweilige Sonde mit dem Gasspeicher in Strömungsverbindung steht und an dem das Medium einen Druck aufweist, und
   - die Fließrate des Mediums in jeder der mindestens zwei Sonden anhand von Sollwerten eingestellt wird,

   **dadurch gekennzeichnet,**
   **dass** die Sollwerte ($S_1$-$S_N$) derart bestimmt werden, dass die Differenz zwischen den Sondenfließdrücken ($p_{P1-2}$, $p_{P2-N}$, $p_{PN-1}$) des Mediums der Sondengruppe ($2_1$-$2_N$) minimiert ist.

2. Verfahren nach Anspruch 1, **dadurch gekennzeichnet, dass** die Sollwerte ($S_1$-$S_N$) derart bestimmt werden, dass die Differenz ($p_{P1-2}$, $p_{P2-N}$, $p_{PN-1}$) zwischen den Sondenfließdrücken des Mediums aller Sonden ($2_1$-$2_N$) minimiert ist.

3. Verfahren nach Anspruch 1 oder 2, **dadurch gekennzeichnet, dass** die Sollwerte ($S_1$-$S_N$) anhand eines mathematischen Modells bestimmt werden, bei dem das Zusammenwirken der mindestens zwei Sonden ($2_1$-$2_N$) und des Gasspeichers (1) in Form eines Netzwerks (N) beschrieben wird.

4. Verfahren nach Anspruch 3, **dadurch gekennzeichnet, dass** das Netzwerk (N) Elemente ($R_{h1}$-$R_{hN}$, $R_{v1}$-$R_{vN}$, $e^{2s}$, $\alpha_1$-$\alpha_N$, $b_1$-$b_N$, $\alpha_1$-$\alpha_N$, $\beta_1$-$\beta_N$, $R_{s1}$-$R_{sN}$, $C_{s1}$-$C_{sN}$) in Form von Widerstandselementen, Spannungsquellen und Speicherelementen enthält, die das Verhalten der mindestens zwei Sonden ($2_1$-$2_N$) und des Gasspeichers (1) beschreiben.

5. Verfahren nach einem der vorangehenden Ansprüche, **dadurch gekennzeichnet, dass** die Sollwerte ($S_1$-$S_N$) derart angepasst werden, dass den Differenzen zwischen den Sondenfließdrücken ($P_{P1-2}$, $P_{P2-N}$, $P_{PN-1}$) Spannungsdifferenzen der mindestens zwei Sonden ($2_1$-$2_N$) entsprechen, minimiert werden.

6. Verfahren nach einem der vorangehenden Ansprüche, **dadurch gekennzeichnet, dass** die Elemente ($R_{h1}$-$R_{hN}$, $R_{v1}$-$R_{vN}$, $e^{2s}$, $a_1$-$a_N$, $b_1$-$b_N$, $\alpha_1$-$\alpha_N$, $\beta_1$-$\beta_N$, $R_{s1}$-$R_{sN}$, $C_{s1}$-$C_{sN}$) des die Sonden ($2_1$-$2_N$) und den Gasspeicher (1) beschreibenden Netzwerks (N) in Echtzeit abhängig vom aktuellen Zustand des Gasspeichers (1) bestimmt werden.

7. Verfahren nach einem der vorangehenden Ansprüche, **dadurch gekennzeichnet, dass** die Sollwerte ($S_1$-$S_N$) in Abhängigkeit vom Zustand des Gasspeichers (1) angepasst werden.

8. Verfahren nach Anspruch 7, **dadurch gekennzeichnet, dass** die Sollwerte ($S_1$-$S_N$) bei Veränderungen der Elemente ($R_{h1}$-$R_{hN}$. $R_{v1}$-$R_{vN}$, $e^{2s}$, $a_1$-$a_N$, $b_1$-$b_N$, $\alpha_1$-$\alpha_N$, $\beta_1$-$\beta_N$, $R_{s1}$-$R_{sN}$, $C_{s1}$-$C_{sN}$) des Netzwerks (N), deren Wert einen Grenzwert überschreitet, angepasst werden.

9. Verfahren nach einem der vorangehenden Ansprüche, **dadurch gekennzeichnet, dass** die Werte der Elemente ($R_{h1}$-$R_{hN}$, $R_{v1}$-$R_{vN}$, $e^{2s}$, $a_1$-$aN$, $b_1$-$b_N$, $\alpha_1$-$a_N$, $\beta_1$-$\beta_N$, $R_{s1}$-$R_{sN}$, $C_{s1}$-$C_{sN}$) des Netzwerks (N) und/oder die Sollwerte ($S_1$-$S_N$) in einer Datenbank (61) einer Steuerungseinrichtung (6) gespeichert werden.

10. Verfahren nach Anspruch 9, **dadurch gekennzeichnet, dass** aus vorab gespeicherten Sollwerten ($S_1$-$S_N$) und Elementen ($R_{h1}$-$R_{hN}$, $R_{v1}$-$R_{vN}$, $e^{2s}$, $a_1$-$aN$, $b_1$-$b_N$, $\alpha_1$-$\alpha_N$, $\beta_1$-$\beta_N$) des Netzwerks (N) der Zustand des Gasspeichers (1) identifiziert wird.

11. Verfahren nach Anspruch 10, **dadurch gekennzeichnet, dass** aus den vorab gespeicherten Sollwerten ($S_1$-$S_N$) und Elementen ($R_{h1}$-$R_{hN}$, $R_{v1}$-$R_{vN}$, $e^{2s}$, $a_1$-$a_N$, $b_1$-$b_N$, $\alpha_1$-$\alpha_N$, $\beta_1$-$\beta_N$) des Netzwerks (N) die den Zustand des Gasspeichers (1) beschreibenden Elemente ($R_{s1}$-$R_{sN}$, $C_{s1}$-$C_{sN}$) des Netzwerks (N) identifiziert werden.

12. Verfahren nach einem der vorangehenden Ansprüche, **dadurch gekennzeichnet, dass** bei der Bestimmung der Elemente ($R_{h1}$-$R_{hN}$, $R_{v1}$-$R_{vN}$, $e^{2s}$, $a_1$-$a_N$, $b_1$-$b_N$, $\alpha_1$-$\alpha_N$, $\beta_1$-$\beta_N$) des Netzwerks (N) die Rohrlängen, Rohrdurchmesser und Rohrreibungszahlen jeder der mindestens zwei Sonden ($2_1$-$2_N$) berücksichtigt werden.

13. Verfahren nach Anspruch 12, **dadurch gekennzeichnet, dass** die Rohrlängen, Rohrdurchmesser und Rohrreibungszahlen entlang einer Sonde ($2_1$-$2_N$) variieren und die Variation bei der Bestimmung der Elemente ($R_{h1}$-$R_{hN}$, $R_{v1}$-$R_{vN}$, $e^{2s}$, $a_1$-$a_N$, $b_1$-$b_N$, $\alpha_1$-$\alpha_N$, $\beta_1$-$\beta_N$) des Netzwerks (N) berücksichtigt wird.

14. Verfahren nach Anspruch 12 oder 13, **dadurch gekennzeichnet, dass** sich die Rohrreibungszahlen in Abhängigkeit von der Strömung durch eine Sonde ($2_1$-$2_N$) ändern und entsprechend in Abhängigkeit von der Strömung berücksichtigt werden.

15. Verfahren nach einem der Ansprüche 12 bis 14, **dadurch gekennzeichnet, dass** die entlang der Sonden ($2_1$-$2_N$) sich ändernden Rohrlängen, Rohrdurchmesser und Rohrreibungszahlen in einer Datenbank (61) gespeichert sind.

16. Verfahren nach einem der vorangehenden Ansprüche, **dadurch gekennzeichnet, dass** bei einem Ausspeisevorgang die Druckdifferenz $P_{1O\text{-}P}$-$P_{NO\text{-}P}$ zwischen der Speicherschicht $P_1$-$P_N$ und einem am der Speicherschicht $P_1$-$P_N$ gegenüberliegenden Ende der Sonde $2_1$-$2_N$ angeordneten Sondenkopf $O_1$-$O_N$ einer der mindestens zwei Sonden $2_1$-$2_N$ dahingehend überwacht wird, dass der Wert der Druckdifferenz $P_{1O\text{-}P}$-$P_{NO\text{-}P}$ einen Grenzwert nicht überschreitet.

17. Steuerungsvorrichtung zum Betreiben eines unterirdischen Gasspeichers, zur Durchführung des Verfahrens nach einem der vorangehenden Ansprüche, mit einer Schnittstelle, über die die Steuerungsvorrichtung mit einer aus mindestens zwei Sonden bestehenden Sondengruppe zum Einspeisen eines Mediums in den Gasspeicher oder zum Ausspeisen des Mediums aus dem Gasspeicher gekoppelt ist und die mindestens zwei Sonden steuert, wobei die mindestens zwei Sonden je einer Speicherschicht $P_1$-$P_N$ zugeordnet sind, über die jeweilige Sonde mit dem Gasspeicher in Strömungsverbindung steht und an dem das Medium einen Druck aufweist,
**dadurch gekennzeichnet,**
**dass** die Steuerungsvorrichtung (6) so ausgebildet ist, dass die mindestens zwei Sonden ($2_1$-$2_N$) derart gesteuert werden, dass die Differenzen ($P_{P1\text{-}2}$, $P_{P2\text{-}N}$, $P_{PN\text{-}1}$) zwischen den Sondenfließdrücken des Mediums der Sondengruppe ($2_1$-$2_N$) minimiert ist.

18. Steuerungsvorrichtung nach Anspruch 17, **gekennzeichnet durch** eine Datenbank (61) zur Speicherung von den Sonden ($2_1$-$2_N$) und dem Gasspeicher (1) zugeordneten Sondenparametern in Form von technischen und geologischen Daten und historischen Messwerten.

**19.** Steuerungsvorrichtung nach Anspruch 18, **dadurch gekennzeichnet, dass** die Steuerungsvorrichtung (6) ausgebildet ist, die in der Datenbank (61) gespeicherten Sondenparameter während des Betriebs zu aktualisieren.

**20.** Steuerungsvorrichtung nach einem der Ansprüche 17 bis 19, **dadurch gekennzeichnet, dass** die Steuerungsvorrichtung (6) ein Betriebsführungsmodul (67) zur Steuerung der Sonden ($2_1$-$2_N$) aufweist.

**21.** Steuerungsvorrichtung nach einem der Ansprüche 19 bis 20, **dadurch gekennzeichnet, dass** die Steuerungsvorrichtung (6) ein Sondentestmodul (63) zur Bestimmung von den die Sonden ($2_1$-$2_N$) beschreibenden Sondenparametern aufweist.

**22.** Steuerungsvorrichtung nach einem der Ansprüche 17 bis 21, **dadurch gekennzeichnet, dass** die Steuerungsvorrichtung (6) ein mit der Datenbank (61) zusammenwirkendes Sondenpassmodul (64) zur Verwaltung der Sondenparameter aufweist.

**Claims**

**1.** A method for operating an underground gas reservoir, in which

- a medium is supplied to the gas reservoir and discharged from the gas reservoir,
- a probe group consisting of at least two probes is used for supplying and discharging the medium, which flows through said probe group while being supplied and discharged,
- each of the at least two probes has a storage layer assigned to the gas reservoir, is flow-connected to the gas reservoir and the medium has a pressure at said gas reservoir, and
- the flow rate of the medium in each of the at least two probes is adjusted on the basis of set values,

**characterized in that**
the set values ($S_1$-$S_N$) are determined in such a manner that the difference between the probe flow pressures ($P_{P1-2}$, $P_{P2-N}$, $P_{PN-1}$) of the medium of the probe group ($2_1$-$2_N$) is minimised.

**2.** The method according to Claim 1, **characterized in that** the set values ($S_1$-$S_N$) are determined in such a manner that the difference ($P_{P1-2}$, $P_{P2-N}$, $P_{PN-1}$) between the probe flow pressures of the medium of all probes ($2_1$-$2_N$) is minimised.

**3.** The method according to Claim 1 or 2, **characterized in that** the set values ($S_1$-$S_N$) are determined on the basis of a mathematical model, in which the interaction of the at least two probes ($2_1$-$2_N$) and of the gas reservoir (1) is described in the form of a network (N).

**4.** The method according to Claim 3, **characterized in that** the network (N) contains elements ($R_{h1}$-$R_{hN}$, $R_{v1}$-$R_{vN}$, $e^{2s}$, $\alpha_1$-$\alpha_N$, $b_1$-$b_N$, $\alpha_1$-$\alpha_N$, $\beta_1$-$\beta_N$, $R_{s1}$-$R_{sN}$, $C_{s1}$-$C_{sN}$) in the form of resistance elements, voltage sources and storage elements, which describe the behaviour of the at least two probes ($2_1$-$2_N$) and of the gas reservoir (1).

**5.** The method according to one of the preceding claims, **characterized in that** the set values ($S_1$-$S_N$) are adjusted in such a manner that voltage differences of the at least two probes ($2_1$-$2_N$) corresponding to the differences between the probe flow pressures ($P_{P1-2}$, $P_{P2-N}$, $P_{PN-1}$) are minimised.

**6.** The method according to one of the preceding claims, **characterized in that** the elements ($R_{h1}$-$R_{hN}$, $R_{v1}$-$R_{vN}$, $e^{2s}$, $a_1$-$a_N$, $b_1$-$b_N$, $\alpha_1$-$\alpha_N$, $\beta_1$-$\beta_N$, $R_{s1}$-$R_{sN}$, $C_{s1}$-$C_{sN}$) of the network (N) describing the probes ($2_1$-$2_N$) and the gas reservoir (1) are determined in real time based on the current state of the gas reservoir (1).

**7.** The method according to one of the preceding claims, **characterized in that** the set values ($S_1$-$S_N$) are adjusted based on the state of the gas reservoir (1).

**8.** The method according to Claim 7, **characterized in that** the set values ($S_1$-$S_N$) are adjusted in the event of changes in the elements ($R_{h1}$-$R_{hN}$, $R_{v1}$-$R_{vN}$, $e^{2s}$, $a_1$-$a_N$, $b_1$-$b_N$, $\alpha_1$-$\alpha_N$, $\beta_1$-$\beta_N$, $R_{s1}$-$R_{sN}$, $C_{s1}$-$C_{sN}$) of the network (N), the value of which exceeds a limit.

**9.** The method according to one of the preceding claims, **characterized in that** the values of the elements ($R_{h1}$-$R_{hN}$,

$R_{v1}$-$R_{vN}$, $e^{2s}$, $a_1$-$a_N$, $b_1$-$b_N$, $\alpha_1$- aN, $\beta_1$- $\beta_N$, $R_{s1}$-$R_{sN}$, $C_{s1}$-$C_{sN}$) of the network (N) and/or the set values ($S_1$-$S_N$) are stored in a database (61) of a control device (6).

10. The method according to Claim 9, **characterized in that** the state of the gas reservoir (1) is identified from previously stored set values ($S_1$-$S_N$) and elements ($R_{h1}$-$R_{hN}$, $R_{v1}$-$R_{vN}$, $e^{2s}$, $a_1$-$a_N$, $b_1$-$b_N$, $\alpha_1$- $\alpha_N$, $\beta_1$- $\beta_N$) of the network (N).

11. The method according to Claim 10, **characterized in that** elements ($R_{s1}$-$R_{sN}$, $C_{s1}$-$C_{sN}$) describing the state of the gas reservoir (1) of the network (N) are identified from the previously stored set values ($S_1$-$S_N$) and elements ($R_{h1}$-$R_{hN}$, $R_{v1}$-$R_{vN}$, $e^{2s}$, $a_1$-$a_N$, $b_1$-$b_N$, $\alpha_1$- $\alpha_N$, $\beta_1$-$\beta_N$) of the network (N).

12. The method according to one of the preceding claims, **characterized in that** in the determination of the elements ($R_{h1}$-$R_{hN}$, $R_{v1}$-$R_{vN}$, $e^{2s}$, $a_1$-$a_N$, $b_1$-$b_N$, $\alpha_1$- $\alpha_N$, $\beta_1$- $\beta_N$) of the network (N), the pipe lengths, pipe diameters and pipe friction coefficients of each of the at least two probes ($2_1$-$2_N$) are taken into account.

13. The method according to Claim 12, **characterized in that** the pipe lengths, pipe diameters and pipe friction coefficients vary along a probe ($2_1$-$2_N$) and the variation is taken into account in the determination of the elements ($R_{h1}$-$R_{hN}$, $R_{v1}$-$R_{vN}$, $e^{2s}$, $a_1$-$a_N$, $b_1$-$b_N$, $\alpha_1$- $\alpha_N$, $\beta_1$- $\beta_N$) of the network (N).

14. The method according to Claim 12 or 13, **characterized in that** the pipe friction coefficients vary according to the flow through a probe ($2_1$-$2_N$) and are taken into account accordingly based on the flow.

15. The method according to one of Claim 12 to 14, **characterized in that** the pipe lengths, pipe diameters and pipe friction coefficients varying along the probes ($2_1$-$2_N$) are stored in a database (61).

16. The method according to one of the preceding claims, **characterized in that** during a discharging process the pressure difference $P_{1O\text{-}P}$-$P_{NO\text{-}P}$ between the storage layer $P_1$-$P_N$ and a probe head $O_1$-$O_N$ of one of the at least two probes $2_1$-$2_N$, that is arranged at the end of the probe $2_1$-$2_N$ opposite the storage layer $P_1$-$P_N$, is monitored such that the value of the pressure difference $P_{1O\text{-}P}$-$P_{NO\text{-}P}$ does not exceed a limit.

17. A control device for operating an underground gas reservoir, for carrying out the method according to one of the preceding claims, comprising an interface via which the control device is coupled to a probe group consisting of at least two probes for supplying a medium into the gas reservoir or for discharging the medium from the gas reservoir and controls the at least two probes, wherein the at least two probes are each assigned to a storage layer $P_1$-$P_N$, via which the respective probe is flow-connected to the gas reservoir and the medium has a pressure at said gas reservoir,
**characterized in that**
the control device (6) is designed such that the at least two probes ($2_1$-$2_N$) are controlled in such a manner that the differences ($P_{P1\text{-}2}$, $P_{P2\text{-}N}$, $P_{PN\text{-}1}$) between the probe flow pressures of the medium of the probe group ($2_1$-$2_N$) are minimised.

18. The control device according to Claim 17, **characterized by** a data base (61) for the storage of the probes ($2_1$-$2_N$) and the probe parameters assigned to the gas reservoir (1) in the form of technical and geological data and historical measurements.

19. The control device according to Claim 18, **characterized in that** the control device (6) is designed to update the probe parameters stored in the data base (61) during operation.

20. The control device according to one of Claims 17 to 19, **characterized in that** the control device (6) comprises an operational control module (67) for controlling the probes ($2_1$-$2_N$).

21. The control device according to one of Claims 19 to 20, **characterized in that** the control device (6) comprises a probe test module (63) for determining the probe parameters describing the probes ($2_1$-$2_N$).

22. The control device according to one of Claims 17 to 21, **characterized in that** the control device (6) comprises a probe adaptation module (64) interacting with the database (61) for managing the probe parameters.

**Revendications**

1. Procédé pour faire fonctionner un accumulateur de gaz souterrain, dans lequel

   - un fluide est injecté dans l'accumulateur de gaz et est évacué de l'accumulateur de gaz,
   - un ensemble de sondes comprenant au moins deux sondes est utilisé pour l'injection et l'évacuation de fluide, ensemble à travers lequel le fluide s'écoule lors de l'injection et de l'évacuation,
   - chacune des au moins deux sondes présente une couche-réservoir attribuée à l'accumulateur de gaz, est en liaison d'écoulement avec l'accumulateur de gaz par le biais de la sonde respective et sur lequel le fluide présente une pression, et
   - la vitesse d'écoulement du fluide est réglée dans chacune des au moins deux sondes à l'aide de valeurs de consigne,

   **caractérisé en ce que**,
   les valeurs de consigne ($S_1$-$S_N$) sont déterminées de telle sorte que la différence entre les pressions d'écoulement dans les sondes ($P_{P1-2}$, $P_{P2-N}$, $P_{PN-1}$) du fluide du groupe de sondes ($2_1$-$2_N$) est minimisée.

2. Procédé selon la revendication 1, **caractérisé en ce que** les valeurs de consigne ($S_1$-$S_N$) sont déterminées de telle sorte que la différence ($P_{P1-2}$, $P_{P2-N}$, $P_{PN-1}$) entre les pressions d'écoulement dans les sondes du fluide de toutes les sondes ($2_1$-$2_N$) est minimisée.

3. Procédé selon la revendication 1 ou 2, **caractérisé en ce que** les valeurs de consigne ($S_1$-$S_N$) sont déterminées à l'aide d'un modèle mathématique, dans lequel l'action conjuguée des au moins deux sondes ($2_1$-$2_N$) et de l'accumulateur de gaz (1) est décrite sous la forme d'un réseau (N).

4. Procédé selon la revendication 3, **caractérisé en ce que** le réseau (N) contient des éléments ($R_{h1}$-$R_{hN}$, $R_{v1}$-$R_{VN}$, $e^{2s}$, $a_1$-$a_N$, $b_1$-$b_N$, $\alpha_1$-$\alpha_N$, $\beta_1$-$\beta_N$, $R_{s1}$-$R_{sN}$, $C_{s1}$-$C_{sN}$) sous forme d'éléments de résistance, de sources de tension et d'éléments accumulateurs, qui décrivent le comportement des au moins deux sondes ($2_1$-$2_N$) et de l'accumulateur de gaz (1).

5. Procédé selon l'une quelconque des revendications précédentes, **caractérisé en ce que** les valeurs de consigne ($S_1$-$S_N$) sont adaptées de telle sorte que des différences de tension des au moins deux sondes ($2_1$-$2_N$) correspondent aux différences entre les pressions d'écoulement dans les sondes ($P_{P1-2}$, $P_{P2-N}$, $P_{PN-1}$) et sont minimisées.

6. Procédé selon les revendications précédentes, **caractérisé en ce que** les éléments ($R_{h1}$-$R_{hN}$, $R_{v1}$-$R_{vN}$, $e^{2s}$, $a_1$-$a_N$, $b_1$-$b_N$, $\alpha_1$-$\alpha_N$, $\beta_1$-$\beta_N$, $R_{s1}$-$R_{sN}$, $C_{s1}$-$C_{sN}$) du réseau (N) décrivant les sondes ($2_1$-$2_N$) et l'accumulateur de gaz (1) sont déterminés en temps réel en fonction de l'état actuel de l'accumulateur de gaz (1).

7. Procédé selon l'une quelconque des revendications précédentes, **caractérisé en ce que** les valeurs de consignes ($S_1$-$S_N$) sont adaptées en fonction de l'état de l'accumulateur de gaz (1).

8. Procédé selon la revendication 7, **caractérisé en ce que** les valeurs de consignes ($S_1$-$S_N$) sont adaptées en cas de variations des éléments ($R_{h1}$-$R_{hN}$, $R_{v1}$-$R_{vN}$, $e^{2s}$ , $a_1$-$a_N$, $b_1$-$b_N$, $\alpha_1$-$\alpha_N$, $\beta_1$-$\beta_N$, $R_{s1}$-$R_{sN}$, $C_{s1}$-$C_{sN}$) du réseau (N), dont la valeur dépasse une valeur limite.

9. Procédé selon l'une quelconque des revendications précédentes, **caractérisé en ce que** les valeurs des éléments ($R_{h1}$-$R_{hN}$, $R_{v1}$-$R_{vN}$, $e^{2s}$, $a_1$-$a_N$, $b_1$-$b_N$, $\alpha_1$-$\alpha_N$, $\beta_1$-$\beta_N$, $R_{s1}$-$R_{sN}$, $C_{s1}$-$C_{sN}$) du réseau (N) et/ou les valeurs de consigne ($S_1$-$S_N$) sont stockées dans une banque de données (61) d'un dispositif de commande (6).

10. Procédé selon la revendication 9, **caractérisé en ce que** l'état de l'accumulateur de gaz (1) est identifié à partir de valeurs de consigne ($S_1$-$S_N$) et d'éléments ($R_{h1}$-$R_{hN}$, $R_{v1}$-$R_{vN}$, $e^{2s}$ , $a_1$-$a_N$, $b_1$-$b_N$, $\alpha_1$-$\alpha_N$, $\beta_1$-$\beta_N$) du réseau (N) qui ont été stockés auparavant.

11. Procédé selon la revendication 10, **caractérisé en ce que** les éléments ($R_{s1}$-$R_{sN}$, $C_{s1}$-$C_{sN}$) du réseau (N), qui décrivent l'état de l'accumulateur de gaz (1), sont identifiés à partir des valeurs de consigne ($S_1$-$S_N$) et éléments ($R_{h1}$-$R_{hN}$, $R_{v1}$-$R_{vN}$, $e^{2s}$ , $a_1$-$a_N$, $b_1$-$b_N$, $\alpha_1$-$\alpha_N$, $\beta_1$-$\beta_N$) du réseau (N) qui ont été stockés auparavant.

12. Procédé selon l'une quelconque des revendications précédentes, **caractérisé en ce que**, lors de la détermination

des éléments ($R_{h1}$-$R_{hN}$, $R_{v1}$-$R_{vN}$, $e^{2s}$, $a_1$-$a_N$, $b_1$-$b_N$, $\alpha_1$-$\alpha_N$, $\beta_1$-$\beta_N$) du réseau (N), les longueurs de tuyau, les diamètres de tuyau et les coefficients de frottement de tuyau de chacune des au moins deux sondes ($2_1$-$2_N$) sont pris en compte.

13. Procédé selon la revendication 12, **caractérisé en ce que** les longueurs de tuyau, les diamètres de tuyau et les coefficients de frottement de tuyau le long d'une sonde ($2_1$-$2_N$) varient et la variation est prise en compte pour la détermination des éléments ($R_{h1}$-$R_{hN}$, $R_{v1}$-$R_{vN}$, $e^{2s}$, $a_1$-$a_N$, $b_1$-$b_N$, $\alpha_1$-$\alpha_N$, $\beta_1$-$\beta_N$) du réseau (N).

14. Procédé selon la revendication 12 ou 13, **caractérisé en ce que** les coefficients de frottement de tuyau varient en fonction de l'écoulement à travers une sonde ($2_1$-$2_N$) et sont pris en compte en conséquence en fonction de l'écoulement.

15. Procédé selon l'une quelconque des revendications 12 à 14, **caractérisé en ce que** les longueurs de tuyau, les diamètres de tuyau et les coefficients de frottement de tuyau, qui varient le long des sondes ($2_1$-$2_N$), sont stockés dans une banque de données (61).

16. Procédé selon l'une quelconque des revendications précédentes, **caractérisé en ce que**, lors d'une opération d'évacuation, la différence de pression $P_{1O\text{-}P}$-$P_{NO\text{-}P}$ entre la couche-réservoir $P_1$-$P_N$ et une tête de sonde $O_1$-$O_N$ de l'une des au moins deux sondes $2_1$-$2_N$, qui est disposée sur l'extrémité, opposée à la couche-réservoir $P_1$-$P_N$, de la sonde $2_1$-$2_N$, est contrôlée en ce sens que la valeur de la différence de pression $P_{1O\text{-}P}$-$P_{NO\text{-}P}$ ne dépasse pas une valeur limite.

17. Dispositif de commande pour faire fonctionner un accumulateur de gaz souterrain pour la mise en oeuvre du procédé selon l'une quelconque des revendications précédentes, comprenant une interface, par laquelle le dispositif de commande est couplé avec un groupe de sondes comprenant au moins deux sondes pour l'injection d'un fluide dans l'accumulateur de gaz ou pour l'évacuation du fluide de l'accumulateur de gaz et qui commande au moins deux sondes, les au moins deux sondes étant attribuées chacune à une couche-réservoir $P_1$-$P_N$, étant en liaison d'écoulement par la sonde respective avec l'accumulateur de gaz et sur lequel le fluide présente une pression, **caractérisé en ce que**
le dispositif de commande (6) est conçu de telle sorte que les au moins deux sondes ($2_1$-$2_N$) sont commandées de façon que les différences ($P_{P1\text{-}2}$, $P_{P2\text{-}N}$, $P_{PN\text{-}1}$) entre les pressions d'écoulement dans les sondes du fluide du groupe de sondes ($2_1$-$2_N$) sont minimisées.

18. Dispositif de commande selon la revendication 17, **caractérisé par** une banque de données (61) pour le stockage de paramètres de sonde attribués aux sondes ($2_1$-$2_N$) et à l'accumulateur de gaz (1) sous la forme de données techniques et géologiques et de valeurs de mesure historiques.

19. Dispositif de commande selon la revendication 18, **caractérisé en ce que** le dispositif de commande (6) est conçu pour actualiser les paramètres de sonde stockés dans la banque de données (61) pendant le fonctionnement.

20. Dispositif de commande selon l'une quelconque des revendications 17 à 19, **caractérisé en ce que** le dispositif de commande (6) présente un module de gestion d'exploitation (67) pour la commande des sondes ($2_1$-$2_N$).

21. Dispositif de commande selon l'une quelconque des revendications 19 à 20, **caractérisé en ce que** le dispositif de commande (6) présente un module de test de sonde (63) pour déterminer les paramètres de sonde décrivant les sondes ($2_1$-$2_N$).

22. Dispositif de commande selon l'une quelconque des revendications 17 à 21, **caractérisé en ce que** le dispositif de commande (6) présente un module d'adaptation de sonde (64) coopérant avec la banque de données (61) pour la gestion des paramètres de sonde.

# Fig. 1

# Fig. 2

# Fig. 3

**99** Sollwerte → **102** Optimierung der Sollwertaufteilung $S_i$

**100** Echtzeitwerte → **101** Berechnung der Widerstandswerte $R_{hi}, R_{vi}$

Archiv **107**

**103** Grenzwertvergleich

**104** Empfehlung Operator

**105** verifizierte Sollwerte

**106** Leitsystem

Fig. 4

**Schnittstelle Leitsystem** — 65

→ 21
→ 22
→ 2N

66 — Modul Strategie / Strategische Planung

64 — Prognose-Funktion

67 — Modul Betriebsführung / Betriebsführung

Modul Sondenpass / Verwaltung von Bohrungs- und Sondendaten

Analyse und Berechnung

Modul Sondentest — 63
Berechnung von Sonden-parametern | Berechnung von Speicher-parametern

Modul Reportgenerator — 62
Templates für Diagramme, Tabellen, Berichte

Modul Wissensbasis — 61
Historische Daten | Aggregierte Daten | Geologische Daten | Installations-daten

6

20

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19653725 C1